# EUROPEAN PATENT APPLICATION

(11) **EP 1 944 203 A1**
(43) Date of publication of application: **16.07.2008**
(21) Application number: 06810846.3
(22) Date of filing: 29.09.2006
(51) Int. Cl.: B60R 21/26, B01J 7/00

(54) **GAS GENERATOR**

(30) Priority: 30.09.2005 JP 2005288263
(71) Applicant: NIPPON KAYAKU KABUSHIKI KAISHA, Tokyo 102-8172 (JP)
(72) Inventor: HAYAKAWA, Shinichi, Haruhi-cho, Aishi 4528564 (JP); MATONO, Shougo, Himeji-shi, Hyogo 6792123 (JP)
(74) Representative: TBK-Patent
(86) International application number: PCT/JP2006/319440
(87) International publication number: WO 2007/037362

(57) **Abstract**

A gas generator (1A) has an approximately cylindrical housing in which an ignition chamber (13), first and second combustion chambers (23 and 33), and first and second discharge paths disposed therein. The ignition chamber (13) is disposed in a base portion (10) of the housing and contains an igniter (12) and an enhancer agent (14) stored therein. The first and second combustion chambers (23, 33) are disposed respectively in first and second cylindrical portions (20, 30) of the housing and each contains a gas generating agent. The first and second discharge paths are disposed respectively on the front end sides of the first and second cylindrical portions (20, 30) of the housing and serve to enable gases generated in the first and second combustion chambers (23, 33) to be discharged from the housing therethrough. The inner diameter (r1) of the first combustion chamber (23) and the inner diameter (r2) of the second combustion chamber (33) are suitably regulated so as to differ from each other. Because of such a configuration, in a gas generator having two or more gas output portions driven by one igniter, the outputs in the respective gas output portions can be made different from each other while a size increase of the gas generator and the slower start-up of the gas output in each gas output portion are prevented.

## Description

### TECHNICAL FIELD

The present invention relates to a gas generator incorporated in a vehicle occupant protection apparatus mounted on an automobile or the like.

### BACKGROUND ART

Conventionally, an air bag apparatus which is a vehicle occupant protection apparatus is widely used in view of protection of occupants of automobiles or the like. The airbag apparatus is provided for the purpose of protecting vehicle occupants from shock caused by crash of vehicles or the like. The airbag is instantaneously inflated and expanded at a time of crash of a vehicle or the like to serve as a cushion receiving the body of a vehicle occupant. A gas generator is equipment incorporated in this airbag apparatus to instantaneously generate gas at a time of crash of a vehicle or the like and inflate and expand the airbag.

Airbag apparatuses include a variety of constructions depending on the mounting position on vehicles or parts of the body to be protected. For example, as for the airbag apparatus mounted on automobiles, a driver's airbag installed in front of the driver seat, a passenger's airbag installed in front of the passenger seat, a so-called side airbag or curtain airbag installed on a side of the driver seat or passenger seat, and the like are known. Therefore, gas generators incorporated in airbag apparatuses include a variety of constructions, and the most suitable construction is selected depending on specifications.

One of a variety of constructions of gas generators is a so-called T-shaped gas generator having a cylindrical housing with closed opposite ends and discharging gas from the opposite end portions. In the T-shaped gas generator, an ignition chamber in which an igniter and enhancer agent are stored is provided in the central position of the cylindrical housing, a pair of combustion chambers in which a gas generating agent is stored are provided on the opposite end portions of the cylindrical housing, between which the ignition chamber is sandwiched, and respective gas discharge openings in communication with the respective combustion chambers are separately provided. In this T-shaped gas generator, two gas output portions generating and outputting gas can be provided independently. Moreover, these two gas output portions can be driven by one igniter. The documents disclosing the T-shaped gas generator include, for example, Japanese Patent Laying-Open No. 8-26064 (Patent Document 1), Japanese Patent Laying-Open No. 2003-287400 (Patent Document 2), and the like.

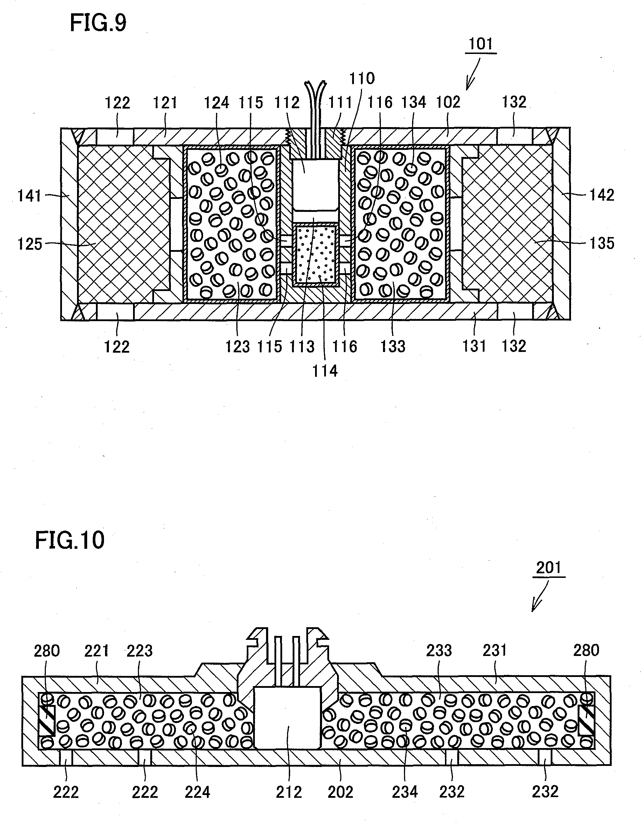

Fig. 9 is a cross-sectional view of a conventional T-shaped gas generator disclosed in the aforementioned Patent Document 1. As shown in Fig. 9, in a T-shaped gas generator 101 in conventional example 1, a base portion 110 and a support member 111 are arranged in the middle portion of a cylindrical housing 102 having opposite ends closed by closing members 141, 142. An igniter 112 and enhancer agent 114 are stored in an ignition chamber 113 defined by base portion 110 and support member 111. On opposite outsides thereof, first and second combustion chambers 123, 133 in which gas generating agents 124, 134 are stored are respectively arranged such that ignition chamber 113 is sandwiched therebetween. On further outsides thereof, first and second filter chambers in which filter members 125, 135 are stored are respectively arranged. Ignition chamber 113 in which enhancer agent 114 is stored and first and second combustion chambers 123, 133 in which gas generating agents 124, 134 are stored are communicated with each other respectively through a first transfer path 115 and a second transfer path 116 provided to base portion 110. Then, gas discharge openings 122, 132 for discharging the generated gas are provided on the circumferential surface of housing 102 at the portions defining the first and second filter chambers, whereby gas output portions 121, 131 are provided at the opposite end portions of cylindrical housing 102.

In T-shaped gas generator 101 in the aforementioned conventional example 1, igniter 112 is actuated at a time of vehicle crash to ignite and burn enhancer agent 114 in ignition chamber 113, and hot particles produced by combustion of enhancer agent 114 pass through first transfer path 115 and second transfer path 116 to respectively flow into first combustion chamber 123 and second combustion chamber 133, whereby gas generating agents 124, 134 stored in first combustion chamber 123 and second combustion chamber 133 are respectively fired and burned. The combustion of gas generating agents 124, 134 cause a large amount of gas to be generated in first and second combustion chambers 123, 133, and the generated gas respectively passes through filter members 125,135 stored in the first filter chamber and the second filter chamber to be discharged to the outside of housing 102 from gas discharge openings 122, 132. Then, the gas discharged from housing 102 inflates and expands the airbag.

On the other hand, Fig. 10 is a cross-sectional view of a T-shaped gas generator in conventional example 2 disclosed in the aforementioned Patent Document 2. As shown in Fig. 10, in a T-shaped gas generator 201 in conventional example 2, an igniter 212 is stored at a position displaced from the middle portion in the axial direction of a cylindrical housing 202 with opposite ends closed. On opposite outsides thereof, first and second combustion chambers 223, 233 in which gas generating agents 224, 234 are stored are respectively arranged such that igniter 212 is sandwiched therebetween. On the circumferential surface of cylindrical housing 202 that defines first and second combustion chambers 223, 233, gas discharge openings 222, 232 for discharging the gas generated in each combustion chamber are provided, whereby gas output portions 221, 231 are provided in the vicinity of the opposite end portions of cylindrical housing 202. In addition, combustion accelerator 280 is arranged at the position closer to the closed end side of housing 202 in each of first and second combustion chambers 223, 233, whereby combustion of the gas generating agent positioned at the portion away from igniter 212 is accelerated.

Also in T-shaped gas generator 201 in the conventional example 2, generally similar to T-shaped gas generator 101 in the above-noted conventional example 1, igniter 212 is actuated at a time of vehicle crash so that gas generating agents 224, 234 stored in first and second combustion chambers 223, 233 are burned to produce a large amount of gas, which is then discharged from gas discharge openings 222, 232 to the outside of housing 202 to inflate and expand the airbag.
Patent Document 1: Japanese Patent Laying-Open No. 8-26064
Patent Document 2: Japanese Patent Laying-Open No. 2003-287400

### DISCLOSURE OF THE INVENTION

### PROBLEMS TO BE SOLVED BY THE INVENTION

T-shaped gas generator 101 in the aforementioned conventional example 1 has a symmetric structure with respect to the middle portion in the axial direction of cylindrical housing 102 and is configured such that first combustion chamber 123 and second combustion chamber 133 are communicated with each other through first transfer path 115, ignition chamber 113 and second transfer path 116 at a time of combustion of gas generating agents 124, 134. Pressure is made uniform between first combustion chamber 123 and second combustion chamber 133 so that the outputs of gas output portions 121, 131 become approximately equivalent.

However, in a case where uniform outputs in a pair of gas output portions are not desired (for example, a case where respective air bags are mounted, independently one for each, for a pair of gas output portions and they are intended to expand at different expansion speeds, a case where internal pressure difference between the aforementioned pair of airbags is intended, or a case where a single airbag is mounted on both of a pair of gas output portions, and the duration of the expanded airbag is intended to be prolonged by adjusting the duration of the gas outputs at the pair of gas output portions), the combustion characteristics of the gas generating agents stored in the first combustion chamber has to be different from the combustion characteristics of the gas generating agent stored in the second combustion chamber. More specifically, the kind or composition of the gas generating agents stored in the first combustion chamber has to be different from the kind or composition of the gas generating agent stored in the second combustion chamber, or the packed amount of the gas generating agent stored in the first combustion chamber has to be different from the packed amount of the gas generating agent stored in the second combustion chamber.

Among these, when the former technique of making a difference in kind or composition of the gas generating agent is employed, the extra manufacturing costs are required to prepare gas generating agents of different kinds or compositions. In addition, the structure of the gas generator has to be optimized according to each gas generating agent, and therefore its implementation is difficult. By contrast, when the latter technique of making a difference in packed amount of the gas generating agent is employed, increased manufacturing costs can be prevented, and relatively easy implementation is possible. However, in order to make a difference in packed amount of the gas generating agent, the capacity of each combustion chamber has to be different and some modification has to be made to the shape of the combustion chamber in the gas generator in conventional example 1.

In T-shaped gas generator 201 in the aforementioned conventional example 2, the capacities of first combustion chamber 223 and 233 are different from each other by making a difference between the axial length of first combustion chamber 223 and the axial length of second combustion chamber 233. However, in the case of such a construction, the start-up of the gas output (more specifically, the time from the actuation of the igniter to discharge of the gas from the gas output portion, and the corresponding discharged amount) in the combustion chamber having the longer axial length (second combustion chamber 233 in T-shaped gas generator 201 shown in Fig. 10) is likely to be slow. This is because the gas generating agent is fired and burned from the ignition chamber side immediately after ignition, and because the distance from the combustion chamber having the longer axial length to the gas discharge thereof is longer than that of the combustion chamber having the shorter axial length. In the airbag apparatus, the airbag has to be inflated and expanded instantaneously from vehicle crash. In particular, in side airbags or curtain airbags, because of a short distance between the passenger and the side surface of the vehicle, the slow start-up of gas output as described above has a significant effect on the expansion speed of the airbag and poses a serious problem.

In addition, when the axial lengths of the combustion chambers are different, the outer shape of the gas generator itself is considerably elongated. When the gas generator is considerably elongated, installation on automobiles with severe restrictions on the mounting space becomes difficult.

The present invention is therefore made to solve the aforementioned problems. An object of the present invention is to provide a gas generator having two or more gas output portions driven by one igniter in which the outputs in the respective gas output portions can be made different from each other, while a size increase of the gas generator and the slower start-up of the gas output in each gas output portion are prevented.

### MEANS FOR SOLVING THE PROBLEMS

A gas generator based on the present invention includes a housing, an ignition chamber provided in the housing, first and second combustion chambers, and first and second discharge paths. The aforementioned housing includes a base portion, a first cylindrical portion extending from the base portion in a first direction, and a second cylindrical portion extending in a second direction different from the first direction. The aforementioned ignition chamber is provided to the base portion and has a single igniter and an enhancer agent stored therein. The aforementioned first combustion chamber is provided in the first cylindrical portion, has a gas generating agent stored therein, and communicates with the ignition chamber. The aforementioned second combustion chamber is provided in the second cylindrical portion, has a gas generating agent stored therein, and communicates with the ignition chamber. The aforementioned first discharge path is provided in the first cylindrical portion at a part positioned opposite to the ignition chamber as viewed from the first combustion chamber for discharging gas generated in the first combustion chamber to outside of the first cylindrical portion. The aforementioned second discharge path is provided in the second cylindrical portion at a part positioned opposite to the ignition chamber as viewed from the second combustion chamber for discharging gas generated in the second combustion chamber to outside of the second cylindrical portion. Then, in this gas generator, an inner diameter of the aforementioned first combustion chamber is set different from an inner diameter of the aforementioned second combustion chamber.

Usually, in a gas generator, a combustion chamber is formed of a cylindrical space formed in the interior of a cylindrical member. Therefore, the combustion chamber has the same inner diameter over the axial direction of the housing, but the inner diameter of the combustion chamber is sometimes formed to be locally different from the other portions due to convenience in processing in the manufacturing process of the gas generator. However, "the inner diameter of the first combustion chamber is different from the inner diameter of the second combustion chamber" as described above should not strictly be interpreted as including this local diameter difference, and such a configuration will suffice in that the substantial inner diameter of the first combustion chamber and the substantial inner diameter of the second combustion chamber are different.

Because of such a configuration, it is possible to make a difference in capacity of each combustion chamber while a size increase of the gas generator is prevented. Therefore, even in a combustion chamber having a large capacity, the distance of gas generating agent fired by actuation of an igniter from the portion on the ignition chamber side to the portion reaching a gas discharge path can be reduced, thereby preventing the start-up of gas output from slowing down. In addition, since a size increase of the gas generator can be prevented, the gas generator can be excellent in integration into an airbag apparatus or the like.

In the gas generator based on the present invention as described above, an axial length of the aforementioned first combustion chamber may be different from an axial length of the aforementioned second combustion chamber.

Making a difference in axial length of each combustion chamber in addition to a difference in inner diameter of each combustion chamber does not always lead to a size increase of the gas generator, and a difference may be made in axial length of each combustion chamber, as necessary, for adjustment of gas output in each gas output portion.

In the gas generator based on the present invention as described above, when the aforementioned first direction and the aforementioned second direction are set in opposite directions, the aforementioned base portion is sandwiched between the first cylindrical portion and the second cylindrical portion such that the ignition chamber, the first combustion chamber and the second combustion chamber are arranged linearly, whereby the aforementioned housing has an elongated, approximately cylindrical shape as a whole.

Because of such a configuration, since the outer shape of the housing is shaped like an approximate cylinder, the gas generator can be reduced in size. Furthermore, the packed amount of the gas generating agent can be adjusted by adjusting the diameter of each combustion chamber, so that the gas generator does not become elongated more than necessary. Therefore, integration into an airbag apparatus or the like is kept superior, and in addition, integration in manufacturing is not impaired.

In the gas generator based on the present invention as described above, in the case where the aforementioned ignition chamber and the aforementioned first combustion chamber are in communication with each other by a first transfer path provided in the aforementioned housing, and the aforementioned ignition chamber and the aforementioned second combustion chamber are in communication with each other by a second transfer path provided in the aforementioned housing, it is preferable that the gas generator further includes restraint means for restraining combustion of the gas generating agent stored in the aforementioned first combustion chamber from having an effect on combustion of the gas generating agent stored in the aforementioned second combustion chamber, though the first transfer path, the ignition chamber and the second transfer path, when the gas generating agent is fired and burned by the enhancer agent ignited by the aforementioned igniter.

Here, "the effect of combustion" includes an effect caused by a pressure variation as a result of a pressure difference between combustion chambers, an effect caused by movement of hot particles, and the like. In actuality, combustion in a combustion chamber under high pressure and combustion in a combustion chamber under low pressure interfere with each other, and in this sense, they affect each other and are affected by each other. However, the language "to have an effect" used in the present description is used, in particular, from the standpoint that combustion in a combustion chamber under high pressure has an effect on combustion in a combustion chamber under low pressure. Furthermore, "to restrain an effect" not only includes to reduce an effect but also includes to completely eliminate an effect.

Because of such a configuration, the restraint means restrains or prevents combustion of the gas generating agent stored in the first combustion chamber from having an effect on combustion of the gas generating agent stored in the second combustion chamber through the first transfer path, the ignition chamber and the second transfer path. Therefore, it becomes possible that the combustion characteristics of the gas generating agent in the first combustion chamber and the combustion characteristics of the gas generating agent in the second combustion chamber are substantially or completely independent of each other, so that the intended combustion characteristics of the gas generating agent can be obtained in the respective combustion chambers, and desired outputs can be obtained in the respective gas output portions.

In the gas generator based on the present invention as described above, as the aforementioned restraint means, the aforementioned first transfer path and the aforementioned second transfer path are preferably arranged to be displaced from each other such that a center line of the aforementioned first transfer path and a center line of the aforementioned second transfer path do not overlap on a same straight line.

Here, "center line of the transfer path" is a line connecting center points in the cross sections of the transfer path which are orthogonal to the direction in which the transfer path extends. When the transfer path is formed of a hole extending linearly, the center line is also a straight line. When the transfer path is formed of a hole extending like a curve, the center line is also a curved line. It is noted that the center line of the transfer path generally overlaps the travel direction of gas or hot particles flowing through the transfer path.

In the gas generator based on the present invention as described above, when the aforementioned first transfer path is provided in the housing such that a center line of the first transfer path and a center axis of the first cylindrical portion overlap on a same straight line, and in addition, the second transfer path is provided in the housing such that a center line of the second transfer path and a center axis of the second cylindrical portion overlap on a same straight line, the aforementioned first cylindrical portion is preferably arranged offset with respect to the aforementioned second cylindrical portion such that the center axis of the first cylindrical portion and the center axis of the second cylindrical portion do not overlap.

Because of such a configuration, an opening of the transfer path is provided at the middle portion of the end portion of each combustion chamber, and then, the center lines of the transfer paths do not overlap on the same straight line. Therefore, the aforementioned restraint means can be provided to the gas generator easily while the combustion characteristics in each combustion chamber are optimized.

Because of such a configuration, the path comprised of the first transfer path, the ignition chamber and the second transfer path positioned between the first combustion chamber and the second combustion chamber becomes complicated as compared with the case where the first transfer path and the second transfer path are provided with the ignition chamber interposed therebetween such that their center lines overlap on the same straight line. Therefore, this functions as restraint means thereby restraining combustion of the gas generating agent stored in the first combustion chamber from having an effect on combustion of the gas generating agent stored in the second combustion chamber. Therefore, it becomes possible that the combustion characteristics of the gas generating agent in the first combustion chamber and the combustion characteristics of the gas generating agent in the second combustion chamber are substantially independent of each other, so that the intended combustion characteristics of the gas generating agent in the respective combustion chambers can be obtained, and desired outputs can be obtained in the respective gas output portions. Here, employment of the configuration as described above is meaningful especially when the first combustion chamber, the ignition chamber and the second combustion chamber are arranged linearly, as a precondition.

In the gas generator based on the present invention as described above, as the aforementioned restraint means, a separation wall is preferably provided between an opening face of the aforementioned first transfer path provided on a wall surface of the aforementioned ignition chamber and an opening face of the aforementioned second transfer path provided on a wall surface of the aforementioned ignition chamber.

Because of such a configuration, the opening face of the first transfer path and the opening face of the second transfer path provided on the wall surfaces of the ignition chamber are separated by the separation wall, so that the first transfer path and the second transfer path can be brought into a substantially or completely incommunicable state. Therefore, the separation wall functions as restraint means thereby restraining or preventing combustion of the gas generating agent stored in the first combustion chamber from having an effect on combustion of the gas generating agent stored in the second combustion chamber. Therefore, it becomes possible that the combustion characteristics of the gas generating agent in the first combustion chamber and the combustion characteristics of the gas generating agent in the second combustion chamber are substantially or completely independent of each other, so that the intended combustion characteristics of the gas generating agent in the respective combustion chambers can be obtained, and desired outputs can be obtained in the respective gas output portions.

In the gas generator based on the present invention as described above, as the aforementioned restraint means, a check valve driven based on a pressure difference between the aforementioned first combustion chamber and the aforementioned second combustion chamber is preferably disposed at a position that allows the aforementioned first transfer path to be closed.

Because of such a configuration, in the state where the gas generating agent is burned in the first combustion chamber, the check valve is driven based on the pressure difference between the first combustion chamber and the second combustion chamber to close the first transfer path, so that the first combustion chamber and the second combustion chamber can be brought into a completely incommunicable state. Therefore, the check valve functions as restraint means thereby preventing combustion of the gas generating agent stored in the first combustion chamber from having an effect on combustion of the gas generating agent stored in the second combustion chamber. Therefore, it becomes possible that the combustion characteristics of the gas generating agent in the first combustion chamber and the combustion characteristics of the gas generating agent in the second combustion chamber are completely independent of each other, so that the intended combustion characteristics of the gas generating agent in the respective combustion chambers can be obtained, and desired outputs can be obtained in the respective gas output portions.

### EFFECTS OF THE INVENTION

In accordance with the present invention, in a gas generator having two or more gas output portions driven by one igniter, the outputs in the respective gas output portions can be made different from each other while a size increase of the gas generator and the slower start-up of the gas output in each gas output portion are prevented, thereby realizing a compact and high-performance airbag apparatus.

### BRIEF DESCRIPTION OF THE DRAWINGS

Fig. 1A is a front view showing an external structure of a gas generator in a first embodiment of the present invention.
Fig. 1B is a right-side view showing an external structure of the gas generator in the first embodiment of the present invention.
Fig. 2 is a view showing an internal structure of the gas generator in the first embodiment of the present invention and is a cross-sectional view taken along line II-II in Fig. 1B.
Fig. 3 is a cross-sectional view of a gas generator in a second embodiment of the present invention.
Fig. 4A is a cross-sectional view of a gas generator in a third embodiment of the present invention.
Fig. 4B is a cross-sectional view taken along line IVB-IVB in Fig. 4A.
Fig. 4C is a cross-sectional view taken along line IVC-IVC in Fig. 4A.
Fig. 5A is a cross-sectional view of a modification to the gas generator in the third embodiment of the present invention.
Fig. 5B is a cross-sectional view taken along line VB-VB in Fig. 5A.
Fig. 5C is a cross-sectional view taken along line VC-VC in Fig. 5A.
Fig. 6A is a cross-sectional view of a gas generator in a fourth embodiment of the present invention.
Fig. 6B is a cross-sectional view taken along line VIB-VIB in Fig. 6A.
Fig. 6C is a cross-sectional view taken along line VIC-VIC in Fig. 6A.
Fig. 7 is a cross-sectional view of a gas generator in a fifth embodiment of the present invention.
Fig. 8A is a view illustrating an operation of a check valve of the gas generator in the fifth embodiment of the present invention and is an enlarged cross-sectional view schematically showing a stage at which combustion of enhancer agent in an ignition chamber has started.
Fig. 8B is a view illustrating an operation of a check valve of the gas generator in the fifth embodiment of the present invention and is an enlarged cross-sectional view schematically showing a stage at which combustion of gas generating agent in a first ignition chamber has started.
Fig. 9 is a schematic cross-sectional view of a gas generator in conventional example 1.
Fig. 10 is a schematic cross-sectional view of a gas generator in conventional example 2.

### DESCRIPTION OF THE REFERENCE SIGNS

1A-1F gas generator, 10 base portion, 11 support member, 12 igniter, 13 ignition chamber, 14 enhancer agent, 15 first transfer path, 15a center line, 15b opening face, 16 second transfer path, 16a center line, 16b opening face, 17, 18, 19 seal member, 20 first cylindrical portion, 20a groove, 21 gas output portion, 22 gas discharge opening, 23 first combustion chamber, 24 gas generating agent, 25 filter member, 26 partition plate, 26a communication hole, 26a distribution chamber, 28 cushion material, 29 seal member, 30 second cylindrical portion, 30a groove, 31 gas output portion, 32 gas discharge opening, 33 second combustion chamber, 34 gas generating agent, 35 filter member, 36 partition plate, 36a communication hole, 36a distribution chamber, 38 cushion material, 39 seal member, 41, 42 closing member, 50 separation wall, 60, 65 check valve, 61, 66 protrusion portion, 62, 67 through hole.

### BEST MODES FOR CARRYING OUT THE INVENTION

In the following, embodiments of the present invention will be described in detail with reference to the figures. It is noted that in the embodiments illustrated below, description will be made to a case where the present invention is applied to a so-called T-shaped gas generator having an approximately cylindrical housing with opposite ends closed and discharging gas from these opposite end portions, by way of example.

### (First Embodiment)

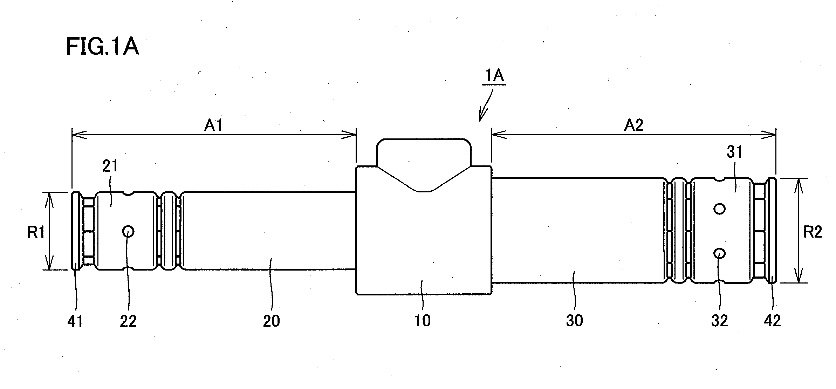

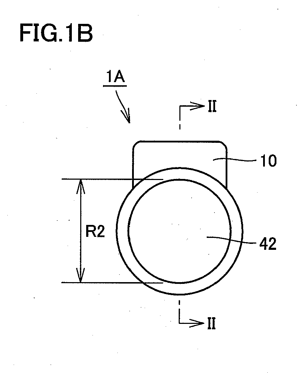

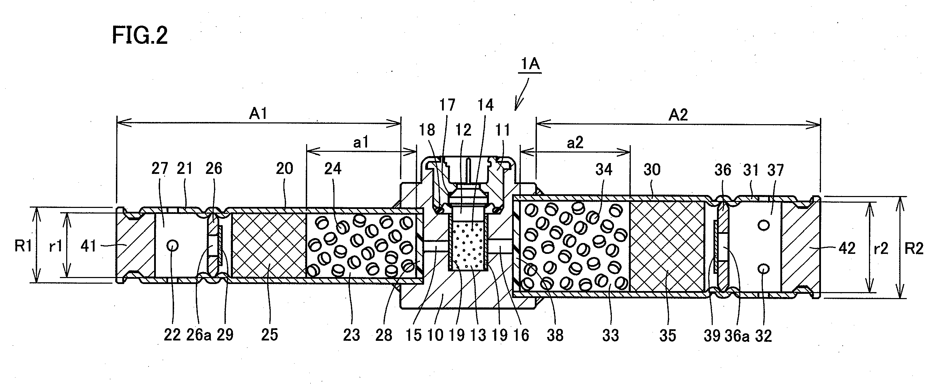

Fig. 1A and Fig. 1B are front views showing an external structure of a gas generator in a first embodiment of the present invention, where Fig. 1A is a front view and Fig. 1B is a right-side view. Fig. 2 is a view showing an internal structure of the gas generator shown in Fig. 1 and is a cross-sectional view taken along line II-II in Fig. 1B.

As shown in Fig. 1A and Fig. 1B, a gas generator 1A in the present embodiment has an elongated, approximately cylindrical housing having an approximately cylindrical outer shape and includes a base portion 10, a first cylindrical portion 20 connected to one end portion of base portion 10, a second cylindrical portion 30 connected to the other end portion of base portion 10, and closing members 41, 42 respectively closing the end portions of first cylindrical portion 20 and second cylindrical portion 30.

As shown in Fig. 2, at a prescribed position in the circumferential direction of base portion 10, a depression portion is provided in a direction crossing the axial direction of the housing having an approximately cylindrical outer shape, and a support member 11 supporting an igniter (squib) 12 as described later is fitted in the depression portion. At a prescribed position in the axial direction of first cylindrical portion 20, a partition plate 26 partitioning the internal space of first cylindrical portion 20 in the axial direction is arranged, and at a prescribed position in the axial direction of second cylindrical portion 30, a partition plate 36 partitioning the internal space of second cylindrical portion 30 in the axial direction is arranged.

These base portion 10, support member 11, first cylindrical portion 20, second cylindrical portion 30, partition plates 26, 36 and closing members 41, 42 are each formed of a member made of metal such as stainless steel, iron steel, aluminum alloy, or stainless steel alloy and are coupled and fixed by welding, calking, and the like. Specifically, support member 11 is fixed by calking in a state in which it is inserted in the depression portion of base portion 10, and first cylindrical portion 20 and second cylindrical portion 30 are fixed to the end portions of base portion 10 by welding. Furthermore, partition plate 36 and closing member 41 are both inserted and fitted in a hollow portion of first cylindrical portion 20 and fixed by calking the circumferential wall of first cylindrical portion 20 inwardly, and partition plate 26 and closing member 42 are both inserted and fitted in a hollow portion of second cylindrical portion 30 and fixed by calking the circumferential wall of second cylindrical portion 30 inwardly.

As shown in Fig. 1A, Fig. 1B, and Fig. 2, in the vicinity of the end portion of first cylindrical portion 20 that is not fixed to base portion 10, a gas discharge opening 22 is provided for discharging gas, and a gas output portion 21 is formed at this part. On the other hand, in the vicinity of the end portion of second cylindrical portion 30 that is not fixed to base portion 10, a gas discharge opening 32 is provided for discharging gas, similarly to first cylindrical portion 20, and a gas output portion 31 is formed at this part.

As shown in Fig. 2, in the interior of the approximately cylindrical housing formed of base portion 10, support member 11, first cylindrical portion 20, second cylindrical portion 30, partition plates 26, 36 and closing members 41, 42, provided are an ignition chamber 13 in which an igniter 12 and enhancer agent 14 are stored, a first combustion chamber 23 in which gas generating agent 24 and a filter member 25 are stored, a second combustion chamber 33 in which gas generating agent 34 and a filter member 35 are stored, a first transfer path 15 communicating ignition chamber 13 with first combustion chamber 23, a second transfer path 16 communicating ignition chamber 13 with second combustion chamber 33, a distribution chamber 27 provided in the interior of gas output portion 21, and a distribution chamber 37 provided in the interior of gas output portion 31. Gas generator 1A in the present embodiment has a symmetrical structure with respect to the approximately middle portion in the axial direction of the approximately cylindrical housing except that first cylindrical portion 20 and second cylindrical portion 30 are formed to have different diameters, and first combustion chamber 23 and first transfer path 15 are arranged in the left portion in the figure while second combustion chamber 33 and second transfer path 16 are arranged in the right portion in the figure. Therefore, ignition chamber 13, first combustion chamber 23 and second combustion chamber 33 are arranged to extend linearly.

Ignition chamber 13 is defined by base portion 10 and support member 11 and is provided at the approximately middle portion in the axial direction of the approximately cylindrical housing. Single igniter 12 and enhancer agent 14 are stored in ignition chamber 13, as described above. Igniter 12 supported by support member 11 is arranged such that its header pin (input terminal) is exposed on the outer surface of gas generator 1A. A connector (not shown) for coupling igniter 12 with a collision detection sensor is connected to the header pin. On the wall surface of igniter 13 having the opening face of first transfer path 15 formed thereon and the wall surface of igniter 13 having the opening face of second transfer path 16 formed thereon, respective seal members 19 are affixed, and seal members 19 close the respective opening faces. For example, an aluminum foil coated with an adhesive member on either surface thereof is used as seal member 19. Accordingly, the airtightness between ignition chamber 13 and first transfer path 15 and second transfer path 16 is secured.

Igniter 12 is an ignition device for generating flame and includes a not-shown ignition charge and a resistor for burning the ignition charge, inside thereof. More specifically, igniter 12 includes a base portion holding a pair of header pins inserted thereto and a squib cup attached on the base portion. A resistor (bridge wire) is attached to couple the tip end of the header pin inserted into the squib cup, and an ignition charge is packed in the squib cup in such a manner as to surround this resistor or to be in contact with the resistor. A nichrome wire or the like is generally used as a resistor, and ZPP (zirconium potassium perchlorate), ZWPP (zirconium tungsten potassium perchlorate), lead tricinate, or the like is generally used as an ignition charge. The squib cup is generally made of metal or plastic.

When collision is detected, a prescribed amount of current flows in the resistor through the header pin. As a result of a prescribed amount of current flowing in the resistor, Joule heat is generated in the resistor and the ignition charge starts burning. High-temperature flame produced by combustion explodes the squib cup storing the ignition charge. The time from current flowing in the resistor to actuation of igniter 12 is two milliseconds or shorter when a nichrome wire is used for the resistor.

A seal member 17 is interposed between igniter 12 and support member 11. Seal member 17 hermetically seals the gap between igniter 12 and support member 11 to enclose ignition chamber 13 and is inserted in the above-noted gap when igniter 12 is fixed to support member 11 by calking. A seal member 18 is also interposed between base portion 10 and support member 11. Seal member 18 hermetically seals the gap between base portion 10 and support member 11 to enclose ignition chamber 13 and is inserted in the above-noted gap when support member 11 is fixed to base portion 10 by calking.

As seal members 17, 18, those formed of a material having sufficient heat resistance and durability are preferably used, and for example, an O-ring made of EPDM resin which is a kind of ethylene propylene rubber is suitably used. Here, a liquid seal agent may additionally be coated at the portions where these seal members are introduced in order to further enhance the hermeticity of ignition chamber 13.

Enhancer agent 14 packed in ignition chamber 13 is ignited by the flame produced by actuation of igniter 12 and burned to generate hot particles. Enhancer agent 14 is required to allow gas generating agents 24, 34 to start burning reliably, and a composition made of metal powder/oxidant represented by B/KNO₃ or the like is generally used. As enhancer agent 14, powder, a mold formed in a prescribed shape by a binder, or the like is used. The shape of the enhancer agent molded by the binder includes a variety of shapes, for example, like granules, a column, a sheet, a ball, a cylinder with a single hole, a cylinder with multiple holes, a tablet, and the like.

First combustion chamber 23 is defined by first cylindrical portion 20, base portion 10 and partition plate 26 and is provided closer to one end of the approximately cylindrical housing (a part on the left side in the figure). Second combustion chamber 33 is defined by second cylindrical portion 30, base portion 10 and partition plate 36 and is provided closer to the other end of the approximately cylindrical housing (a part on the right side in the figure). Gas generating agent 24, 34 and filter members 25, 35 are respectively stored in first combustion chamber 23 and second combustion chamber 33, as described above. Gas generating agents 24, 34 are arranged in the respective spaces of first combustion chamber 23 and second combustion chamber 33 which face ignition chamber 13, and filter members 25, 35 are arranged adjacent to these gas generating agents 24, 34 in the respective spaces of first combustion chamber 23 and second combustion chamber 33 which face partition plates 26, 36.

Gas generating agents 24, 34 are fired by hot particles produced by combustion of enhancer agent 14 ignited by igniter 12 and burned to generate gas. Gas generating agents 24, 34 are generally formed as molded bodies including a fuel, an oxidant and an additive. As a fuel, for example, a triazol derivative, a tetrazol derivative, a guanidine derivative, an azodicarbonamide derivative, a hydrazine derivative, or the like or a combination thereof is used. Specifically, for example, nitroguanidine, guanidine nitrate, cyanoguanidine, 5-aminotetrazol, or the like is suitably used. Furthermore, as an oxidant, for example, nitrate or the like including cation selected from alkali metal, alkaline-earth metal, transition metal, ammonia is used. As a nitrate, for example, sodium nitrate, potassium nitrate, or the like is suitably used. Furthermore, an additive includes a binder, a slag forming agent, a combustion adjustment agent, and the like. As a binder, for example, an organic binder such as a metal salt of carboxymethyl cellulose or stearic acid salt, or an inorganic binder such as synthetic hydroxytalcite or acid clay can suitably be used. As a slag forming agent, silicon nitride, silica, acid clay, or the like can suitably be used. As a combustion adjustment agent, a metal oxide, ferrosilicon, activated carbon, graphite or the like can suitably be used.

The shape of the molded body includes a variety of shapes like granules, pellets, a column, a disk, and the like. A holed molded body having a hole in the interior of the molded body (for example, a cylindrical shape with a single hole or a cylindrical shape with multiple holes) is also used. These shapes are preferably selected as appropriate depending on the specifications of the airbag apparatus having gas generator 1A incorporated therein. An optimum shape is preferably selected according to the specifications, for example, such a shape is selected that allows the gas generation speed to change over time during combustion of gas generating agents 24, 34. In addition to the shape of gas generating agents 24, 34, the size and the packed amount of the molded body are preferably selected as appropriate in consideration of the linear combustion rate, the pressure index of gas generating agents 24, 34, and the like.

In first combustion chamber 23 and second combustion chamber 33, cushion materials 28, 38 are arranged respectively in contact with the wall surfaces of base portion 10 on which the opening face of first transfer path 15 and the opening face of second transfer path 16 are formed. These cushion materials 28, 38 are attached for the purpose of preventing gas generating agents 24, 34 formed of molded bodies from being crushed by vibration and the like, and a molded body of ceramic fiber, foamed silicon or the like is suitably used.

Filter members 25, 35 are formed, for example, by winding a wire material or a net material of a metal such as stainless steel or iron steel or compressing the same by presswork. Filter members 25, 35 function as cooling means for cooling gas by removing hot-temperature heat of the gas generated in first combustion chamber 23 and second combustion chamber 33 when the gas passes through filter members 25, 35, and also function as removal means for removing residue (slag) and the like included in the gas.

Communication holes 26a, 36a are provided in partition plates 26, 36, respectively. Communication hole 26a communicates first combustion chamber 23 with gas discharge opening 22, and communication hole 36a communicates second combustion chamber 33 with gas discharge opening 32. On the main surface of partition plate 26 which is positioned to face first combustion chamber 23 and the main surface of partition plate 36 which is positioned to face second combustion chamber 23, seal members 29, 39 are affixed to close the aforementioned communication holes 26a, 36a, respectively. For these seal members 29, 39, an aluminum foil coated with an adhesive member on either surface thereof, or the like is used. Thus, the airtightness between first combustion chamber 23 and second combustion chamber 33 and the outside of the housing is secured.

Distribution chamber 27 is defined by first cylindrical portion 20, partition plate 26 and closing member 41 and is provided closer to one end (the part on the left side in the figure) of the approximately cylindrical housing and on the closing member 41 side away from first combustion chamber 23. Distribution chamber 37 is defined by second cylindrical portion 30, partition plate 36 and closing member 42 and is provided closer to the other end (the part on the right side in the figure) of the approximately cylindrical housing and on the closing member 42 side away from second combustion chamber 33. Distribution chambers 27, 37 are spaces for respectively distributing the gas flowing in from first combustion chamber 23 and second combustion chamber 33 through communication holes 26a, 36a provided in partition plates 26, 36, to a plurality of drilled, gas discharge openings 22, 32 and are parts for communicating first combustion chamber 23 and second combustion chamber 33 with the outside during operation of gas generator 1A. Here, a path constituted with communication hole 26a, distribution chamber 27 and gas discharge opening 22 corresponds to a first discharge path for discharging the gas generated in first combustion chamber 23 to the outside of first cylindrical portion 20, and a path constituted with communication hole 36a, distribution chamber 37 and gas discharge opening 32 corresponds to a second discharge path for discharging the gas generated in second combustion chamber 33 to the outside of second cylindrical portion 30.

The operation of the gas generator in the present embodiment will now be described. When a vehicle having gas generator 1A in the present embodiment mounted thereon collides, a collision detection means separately provided in the vehicle detects the collision, based on which igniter 12 is actuated. Enhancer agent 14 stored in ignition chamber 13 is ignited by flame produced by the actuation of igniter 12 and burns to generate a large amount of hot particles. The combustion of enhancer agent 14 raises the pressure in ignition chamber 13, which breaks off sealing of seal member 19 so that the hot particles pass through first transfer path 15 and second transfer path 16 to reach cushion materials 28, 38 arranged closer to base portion 10 in first combustion chamber 23 and second combustion chamber 33. The hot particles that have reached cushion materials 28, 38 open up or split cushion materials 28, 38 by the heat whereby the hot particles flow into first combustion chamber 23 and second combustion chamber 33.

Gas generating agents 24, 34 stored in first combustion chamber 23 and second combustion chamber 33 are fired and burned by the flowing hot particles thereby generating a large amount of gas. The combustion of gas generating agents 24, 34 raises the pressure in first combustion chamber 23 and second combustion chamber 33, which breaks off the sealing of seal members 29, 39, and the generated gas passes through communication holes 26a, 36a, distribution chambers 27, 37 and gas discharge openings 22, 32 of the first and second discharge paths, respectively, and is discharged from gas output portions 21, 31 to the outside of gas generator 1A. Here, the gas passes through each of filter members 25, 35 to be cooled to a prescribed temperature, is discharged from each of gas discharge openings 22, 32 to the outside of the housing, and is thereafter introduced into the airbag to inflate and expand the airbag.

In gas generator 1A in the present embodiment, there is a difference between the packed amount of gas generating agent 24 stored in first combustion chamber 23 and the packed amount of gas generating agent 34 stored in second combustion chamber 33. Specifically, as shown in Fig. 1A, gas generator 1 A is configured such that an outer diameter R2 of second cylindrical portion 30 is larger than an outer diameter R1 of first cylindrical portion 20, so that as shown in Fig. 2, an inner diameter r2 of second cylindrical portion 30 is larger than an inner diameter r1 of first cylindrical portion 20. In addition, gas generator 1A is configured such that an axial length A1 of first cylindrical portion 20 is set equal to an axial length A2 of second cylindrical portion 30, so that an axial length a1 of that portion of first combustion chamber 23 in which gas generating agent 24 is stored is equal to an axial length a2 of that part of second combustion chamber 33 in which gas generating agent 34 is stored. Therefore, the capacity of second combustion chamber 33 is configured to be larger than the capacity of first combustion chamber 23, so that the packed amount of gas generating agent 34 stored in second combustion chamber 33 is larger than the packed amount of gas generating agent 24 stored in first combustion chamber 23.

In this manner, inner diameter r2 of second combustion chamber 33 is set larger than inner diameter r1 of first combustion chamber 23, so that the packed amount of gas generating agent 34 stored in second combustion chamber 33 can be increased as compared with the packed amount of gas generating agent 24 stored in first combustion chamber 23, without elongating gas generator 1A. Therefore, even in second combustion chamber 33 having a large capacity, the distance of gas generating agent 34 fired by the actuation of igniter 12 from the portion on the ignition chamber 13 side to the portion facing communication hole 36a which is an upstream end of the gas discharge path can be set equal to that of first combustion chamber 23 having a small capacity, so that the start-up of gas output in gas output portion 32 can be equivalent to the start-up of gas output in gas output portion 31.

Therefore, in a case where uniform outputs in a pair of gas output portions are not desired (for example, a case where respective airbags are mounted, independently one for each, for a pair of gas output portions and they are intended to expand at different expansion speeds, a case where internal pressure difference between the aforementioned pair of airbags is intended, or a case where a single airbag is mounted on both of a pair of gas output portions, and the duration of the expanded airbag is intended to be prolonged by adjusting the duration of the gas output at the pair of gas output portions), the respective output characteristics in a pair of gas output portions can be made different from each other without slowing down the gas output and without elongating the gas generator. As a result, a gas generator suitable to realize a compact, high-performance airbag apparatus can be provided. In particular, it is possible to provide a gas generator advantageous in incorporation into a side airbag or a curtain airbag which has to be applied to such a small space as between the occupant and the side face of a vehicle.

### (Second Embodiment)

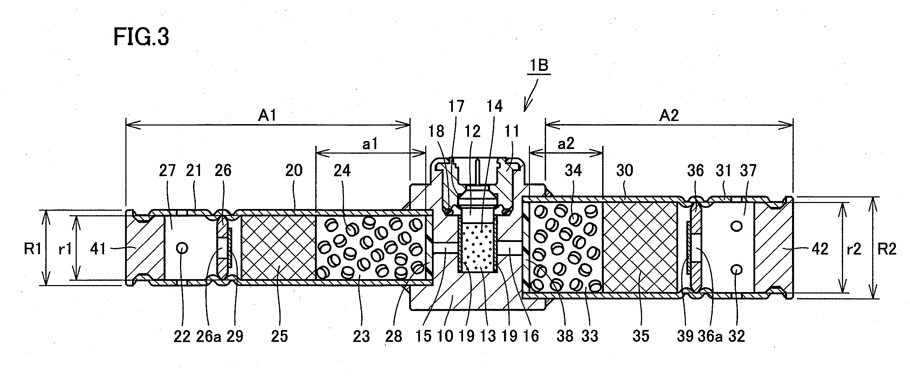

Fig. 3 is a cross-sectional view of a gas generator in a second embodiment of the present invention. It is noted that a gas generator 1B in the present embodiment has a configuration common to gas generator 1A in the first embodiment as described above for the most part, and therefore the portions similar to those of gas generator 1A in the first embodiment as described above are denoted with the same reference characters in the figure and description thereof will not be repeated here.

As shown in Fig. 3, in gas generator 1B in the present embodiment, similar to gas generator 1A in the first embodiment as described above, inner diameter r2 of second cylindrical portion 30 is configured to be larger than inner diameter r1 of first cylindrical portion 20. However, gas generator 1B in the present embodiment differs from gas generator 1A in the first embodiment as described above in that axial length A2 of second cylindrical portion 30 is made shorter than axial length A1 of first cylindrical portion 20 so that axial length a2 of that part of second combustion chamber 33 in which gas generating agent 34 is stored is shorter than axial length a1 of that portion of first combustion chamber 23 in which gas generating agent 24 is stored.

As a result, the packed amount of gas generating agent 34 stored in second combustion chamber 33 is set larger than the packed amount of gas generating agent 24 stored in first combustion chamber 23, and in addition, in second combustion chamber 33 having a large capacity, the distance of gas generating agent 34 fired by the actuation of igniter 12 from the portion on the ignition chamber 13 side to the portion facing communication hole 36a which is the upstream end of the gas discharge path is made smaller than that of first combustion chamber 23 having a small capacity, so that the start-up of gas output in gas output portion 32 is enhanced as compared with the start-up of gas output in gas output portion 31.

Here, consider a change in outer dimension of the gas generator in a case where the capacity of the combustion chamber is increased by extending the combustion chamber in the axial length and a case where the capacity of the combustion chamber is increased by increasing the inner diameter of the combustion chamber. In the former case, the capacity of the combustion chamber increases in proportion to the axial length of the combustion chamber, while in the latter case, the capacity of the combustion chamber increases in proportion to the second power of the size of the inner diameter. Therefore, between the case where the axial length is extended and the case where the inner diameter is increased, by the same length, increasing the inner diameter is superior in light of size reduction of the gas generator.

Therefore, in a case where uniform outputs in a pair of gas output portions are not desired (for example, a case where respective airbags are mounted, independently one for each, for a pair of gas output portions and they are intended to expand at different expansion speeds, a case where internal pressure difference between the aforementioned pair of airbags is intended, or a case where a single airbag is mounted on both of a pair of gas output portions, and the duration of the expanded airbag is intended to be prolonged by adjusting the duration of the gas output at the pair of gas output portions), the gas output in the gas output portion with a larger packed amount of the gas generating agent is enhanced as compared with the gas output in the gas output portion with a smaller packed amount of the gas generating agent, and in addition, the respective output characteristics in a pair of gas output portions can be made different from each other. As a result, a gas generator suitable to realize a compact, high-performance airbag apparatus can be provided. In particular, it is possible to provide a gas generator advantageous in incorporation into a side airbag or a curtain airbag which has to be applied to such a small space as between the occupant and the side face of a vehicle.

### (Third Embodiment)

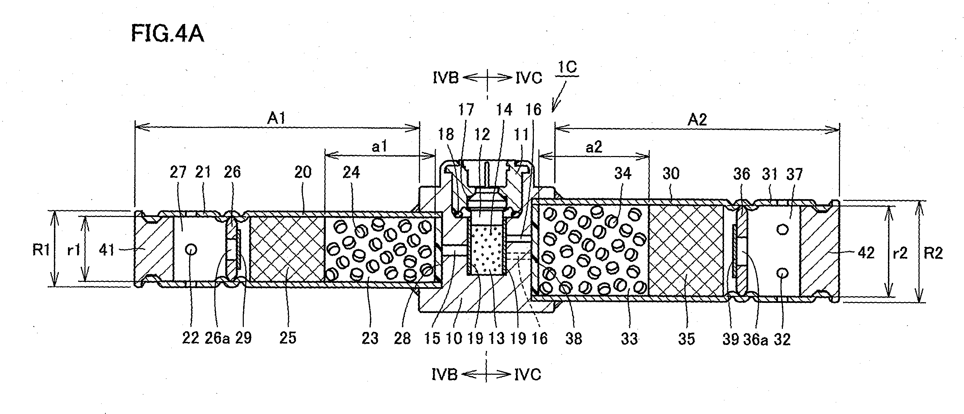

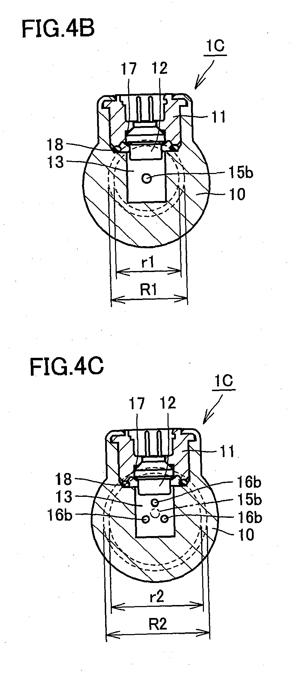

Fig. 4A is a cross-sectional view of a gas generator in a third embodiment of the present invention, Fig. 4B is a cross-sectional view taken along line IVB-IVB in Fig. 4A, and Fig. 4C is a cross-sectional view taken along line IVC-IVC in Fig. 4A. It is noted that a gas generator 1C in the present embodiment has a configuration common to gas generator 1A in the first embodiment as described above for the most part, and therefore the portions similar to those of gas generator 1A in the first embodiment as described above are denoted with the same reference characters in the figures and description thereof will not be repeated here. Furthermore, in Fig. 4B and Fig. 4C, the seal member affixed on the wall surface of the ignition chamber and the enhancer agent are not shown.

In gas generators 1A, 1B in the first and second embodiments as described above, in a case where uniform outputs in a pair of gas output portions 31, 32 are not desired, for the purpose of making the respective output characteristics in a pair of gas output portions 31, 32 different from each other, a difference is made between the packed amount of gas generating agent 24 stored in first combustion chamber 23 and the packed amount of gas generating agent 34 stored in second combustion chamber 33. However, in gas generators 1A, 1B in the first and second embodiments as described above, the opening face of first transfer path 15 and the opening face of second transfer path 16 which are provided on the wall surfaces of ignition chamber 13 are arranged to face each other and in addition, first transfer path 15 and second transfer path 16 are provided such that their center lines overlap on the same straight line with ignition chamber 13 interposed therebetween, so that in operation of gas generators 1A, 1B, that is, in the state in which gas generating agents 24, 34 are fired by enhancer agent 14 ignited by igniter 12, it is feared that combustion of gas generating agents 24, 34 in first combustion chamber 23 and second combustion chamber 33 affects the combustion of the gas generating agent in the respective other combustion chamber through first transfer path 15, ignition chamber 13 and second combustion path 16. Then, in gas generator 1C in the present embodiment, restraint means is provided so that the combustion of the gas generating agent in one combustion chamber does not have an effect on the combustion of the gas generating agent in the other combustion chamber.

As shown in Fig. 4A to Fig. 4C, in gas generator 1C in the present embodiment, similar to gas generator 1A in the first embodiment as described above, inner diameter r2 of second cylindrical portion 30 is configured to be larger than inner diameter r1 of first cylindrical portion 20. First transfer path 15 communicating ignition chamber 13 with first combustion chamber 23 is formed of one hole drilled in base portion 10 to extend linearly, and second transfer path 16 communicating ignition chamber 13 with second combustion chamber 33 is formed of three holes drilled in base portion 10 to extend linearly. Then, first transfer path 15 and second transfer path 16 are disposed to be displaced in parallel such that a center line 15a of the hole forming first transfer path 15 and a center line 16a of the hole forming second transfer path 16 do not overlap on the same straight line.

Because of such a configuration, a path comprised of first transfer path 15, ignition chamber 13 and second transfer path 16 positioned between first combustion chamber 23 and second combustion chamber 33 becomes complicated as compared with the case where first transfer path 15 and second transfer path 16 are provided such that their center lines overlap on the same straight line with ignition chamber 13 interposed therebetween. Therefore, such disposition of first transfer path 15 and second transfer path 16 functions as restraint means per se, so that in operation of gas generator 1C, that is, in the state where gas generating agents 24, 34 are fired by enhancer agent 14 ignited by igniter 12, the effect of the combustion of gas generating agent 24 stored in first combustion chamber 23 on the combustion of gas generating agent 34 stored in second combustion chamber 33 can be restrained. More specifically, when a pressure difference occurs between first combustion chamber 23 and second combustion chamber 33, a backflow of generated gas caused by a pressure increase in first combustion chamber 23 produced by combustion of gas generating agent 24 in first combustion chamber 23 is prevented, and the resultant movement of hot particles from first combustion chamber 23 to second combustion chamber 33 is prevented. Therefore, it becomes possible that the combustion characteristics of gas generating agent 24 in first combustion chamber 23 and the combustion characteristics of gas generating agent 34 in second combustion chamber 33 are substantially independent of each other, so that the intended combustion characteristics of gas generating agents 24, 34 in the respective combustion chambers 23, 33 can be obtained, and desired outputs can be obtained in the respective gas output portions 21, 31.

In addition, in gas generator 1C in the present embodiment, first transfer path 15 and second transfer path 16 are disposed to be displaced from each other such that when an opening face 15b of first transfer path 15 provided on the wall surface of ignition chamber 13 is projected onto the wall surface of ignition chamber 13 on which an opening face 16b of second transfer path 16 is provided, along center line 15a of first transfer path 15, the projected opening face 15b of first transfer path 15 does not overlap opening face 16b of second transfer path 16 (see, in particular, Fig. 4C). Therefore, the restraint effect is more outstanding.

As described above, in a case where uniform outputs in a pair of gas output portions are not desired, (for example, a case where respective airbags are mounted, independently one for each, for a pair of gas output portions and they are intended to expand at different expansion speeds, a case where internal pressure difference between the aforementioned pair of airbags is intended, or a case where a single airbag is mounted on both of a pair of gas output portions, and the duration of the expanded airbag is intended to be prolonged by adjusting the duration of the gas output at the pair of gas output portions), employment of the configuration of the gas generator as in the present embodiment allows the respective output characteristics in a pair of gas output portions to be different from each other without slowing down the gas output, without elongating the gas generator, and in addition, while surely preventing a large effect of combustion of the gas generating agent in the first and second combustion chambers on combustion of the gas generating agent in the respective other combustion chamber. As a result, a gas generator suitable to realize a compact, high-performance airbag apparatus can be provided. In particular, it is possible to provide a gas generator advantageous in incorporation into a side airbag or a curtain airbag which has to be applied to such a small space as between the occupant and the side face of a vehicle.

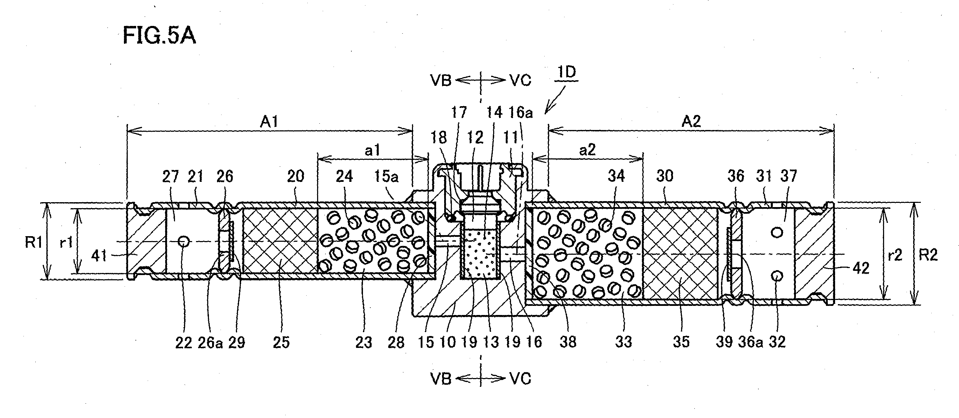

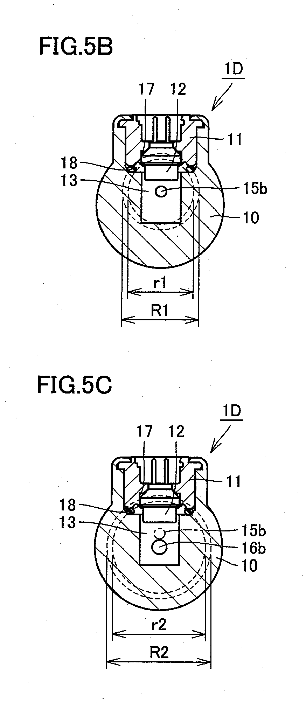

Fig. 5A is a cross-sectional view showing a modification of the gas generator in the present embodiment, Fig. 5B is a cross-sectional view taken along line VB-VB in Fig. 5A, and Fig. 5C is a cross-sectional view taken along line VC-VC in Fig. 5A. It is noted that in Fig. 5B and Fig. 5C, a seal member affixed on the wall surface of the ignition chamber and the enhancer agent are not shown.

As shown in Fig. 5A to Fig. 5C, in a gas generator 1D in the present embodiment, first transfer path 15 is formed of one hole drilled in base portion 10 to extend linearly, and second transfer path 16 is formed of one hole drilled in base portion 10 to extend linearly. In addition, in gas generator 1D in this modification, similar to gas generator 1C in the present embodiment as described above, inner diameter r1 of first cylindrical portion 20 and inner diameter r2 of second cylindrical portion 30 are different. Here, first transfer path 15 is disposed on the center axis of first cylindrical portion 20, and second transfer path 16 is disposed on the center axis of second cylindrical portion 30. Then, first cylindrical portion 20 and second cylindrical portion 30 having different inner diameters are arranged offset in the vertical direction in the figure such that the center axes do not overlap on the same straight line. As a result, first transfer path 15 and second transfer path 16 are arranged to be displaced in parallel, so that center line 15a of the hole forming first transfer path 15 and center line 16a of the hole forming second transfer path 16 do not overlap on the same straight line. Also in such a configuration, the path comprised of first transfer path 15, ignition chamber 13 and second transfer path 16 becomes complicated, so that an outstanding restraint effect can be achieved, similarly to gas generator 1C in the present embodiment as described above. Here, the offset direction and the offset amount in the case where first cylindrical portion 20 is offset with respect to second cylindrical portion 30 are not particularly limited and may be changed as appropriate depending on the specifications of the incorporated airbag apparatus.

Here, in the present embodiment and its modification, the first transfer path and the second transfer path are arranged to be displaced from each other in parallel such that the center line of the first transfer path and the center line of the second transfer path do not overlap on the same straight line. However, at least one of the first transfer path and the second transfer path may be arranged obliquely to cross the axial length of the elongated housing such that the center line of the first transfer path and the center line of the second transfer path are not parallel. In this manner, when the center line of the second transfer path does not overlap on the extended line of the center line of the first transfer path, the restraint effect can be achieved in most cases. Therefore, the shape, dimensions, and formation position of the first transfer path and the second transfer path, or the shape, dimensions, the formation positions, and the like of the first cylindrical portion and the second cylindrical portion can be changed as appropriate.

### (Fourth Embodiment)

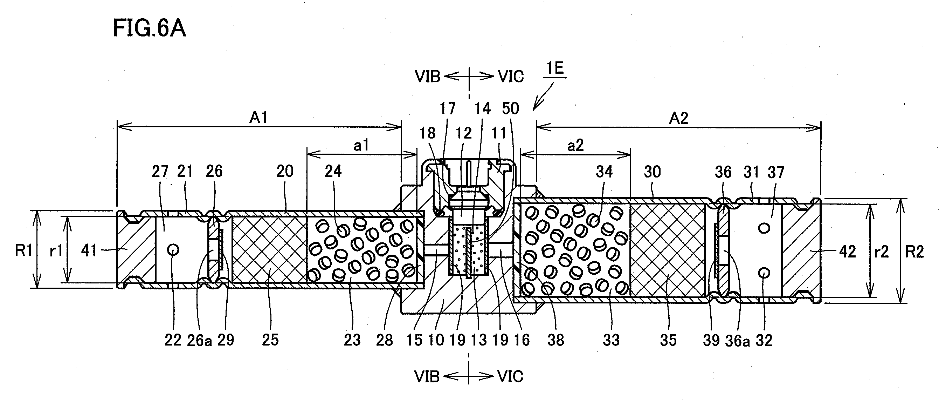

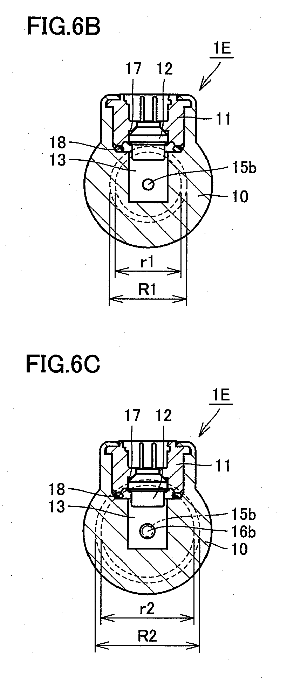

Fig. 6A is a cross-sectional view of a gas generator in a fourth embodiment of the present invention, Fig. 6B is a cross-sectional view taken along line VIB-VIB in Fig. 6A , and Fig. 6C is a cross-sectional view taken along line VIC-VIC in Fig. 6A. It is noted that a gas generator 1 E in the present embodiment has a configuration common to gas generator 1A in the first embodiment as described above for the most part, and therefore the portions similar to those of gas generator 1A in the first embodiment as described above are denoted with the same reference characters in the figures and description thereof will not be repeated here. Furthermore, in Fig. 6B and Fig. 6C, a seal member affixed on the wall surface of the ignition chamber, the enhancer agent, and a separation wall provided in the ignition chamber as described later are not shown.

Similar to gas generator 1D in the third embodiment as described above, gas generator 1E in the present embodiment includes restraint means so that the combustion of the gas generating agent in one combustion chamber does not have an effect on the combustion of the gas generating agent in the other combustion chamber. However, it differs from gas generator 1D in the third embodiment as described above in a specific configuration of the restraint means.

As shown in Fig. 6A to Fig. 6C, in gas generator 1C in the present embodiment, similar to gas generator 1A in the first embodiment as described above, inner diameter r2 of second cylindrical portion 30 is configured to be larger than inner diameter r1 of first cylindrical portion 20. At a prescribed position of ignition chamber 13, a separation wall 50 is provided as restraint means. This separation wall 50 is provided between opening face 15b of first transfer path 15 provided on the wall surface of ignition chamber 13 and opening face 16b of second transfer path 16 provided on the wall surface of ignition chamber 13 and separate these opening faces 15b, 16b from each other. In opposite spaces of ignition chamber 13 partitioned by separation wall 50, enhancer agent 14 is packed. Here, this separation wall 50 is formed of a member made of metal such as stainless steel, iron steel, aluminum alloy, or stainless alloy and is fixed to the wall surface of ignition chamber 13 by fitting, welding, or the like.

Because of such a configuration, opening face 15 b of first transfer path 15 provided on the wall surface of ignition chamber 13 is separated from opening face 16b of second transfer path 16 by separation wall 50, thereby bringing first transfer path 15 and second transfer path 16 into a substantially incommunicable state. Therefore, separation wall 50 functions as restraint means so that an effect of combustion of gas generating agent 24 stored in first combustion chamber 23 on combustion of gas generating agent 34 stored in second combustion chamber 33 is restrained in a state where gas generating agents 24, 34 are fired by enhancer agent 14 ignited by igniter 12. Therefore, it becomes possible that the combustion characteristics of gas generating agent 24 in first combustion chamber 23 and the combustion characteristics of gas generating agent 34 in second combustion chamber 33 are substantially independent of each other, so that the intended combustion characteristics of gas generating agents 24, 34 in the respective combustion chambers 23, 33 can be obtained, and desired outputs can be obtained in respective gas output portions 21,31.

As described above, in a case where uniform outputs in a pair of gas output portions are not desired, (for example, a case where respective airbags are mounted, independently one for each, for a pair of gas output portions and they are intended to expand at different expansion speeds, a case where internal pressure difference between the aforementioned pair of airbags is intended, or a case where a single airbag is mounted on both of a pair of gas output portions, and the duration of the expanded airbag is intended to be prolonged by adjusting the duration of the gas output at the pair of gas output portions), employment of the configuration of the gas generator as in the present embodiment allows the respective output characteristics in a pair of gas output portions to be different from each other without slowing down the gas output, and without elongating the gas generator, and in addition, while surely preventing a large effect of combustion of the gas generating agent in the first and second combustion chambers on combustion of the gas generating agent in the respective other combustion chamber. As a result, a gas generator suitable to realize a compact, high-performance airbag apparatus can be provided. In particular, it is possible to provide a gas generator advantageous in incorporation into a side airbag or a curtain airbag which has to be applied to such a small space as between the occupant and the side face of a vehicle.

Although, in gas generator 1E in the present embodiment, opening face 15b of first transfer path 15 and opening face 16b of second transfer path 16 are completely shielded, by way of example, they are not necessarily completely shielded, and the restraint effect can be achieved to some extent when they are configured to be only partially shielded.

### (Fifth Embodiment)

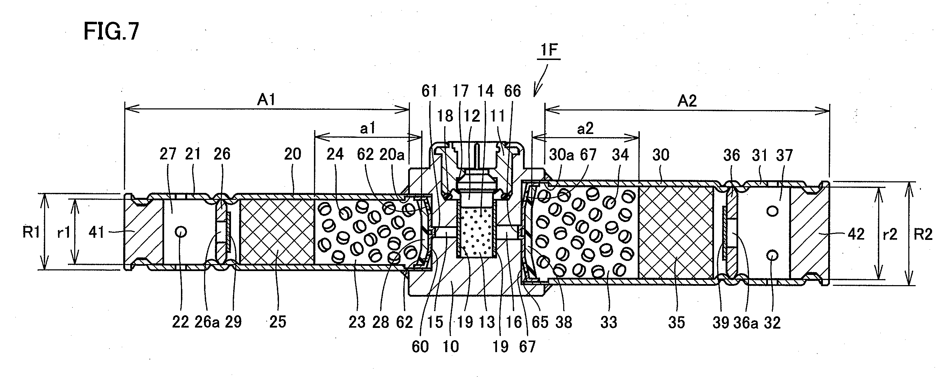

Fig. 7 is a cross-sectional view of a gas generator in a fifth embodiment of the present invention. It is noted that a gas generator 1F in the present embodiment has a configuration common to gas generator 1 A in the first embodiment as described above for the most part, and therefore the portions similar to those of gas generator 1A in the first embodiment as described above are denoted with the same reference characters in the figure and description thereof will not be repeated here.

Similar to gas generators 1D, 1F in the third and fourth embodiments as described above, gas generator 1F in the present embodiment includes restraint means so that the combustion of the gas generating agent in one combustion chamber does not have an effect on the combustion of the gas generating agent in the other combustion chamber. However, it differs from gas generators 1D, 1F in the third and fourth embodiments as described above in a specific configuration of the restraint means.

As shown in Fig. 7, in gas generator 1F in the present embodiment, similar to gas generator 1A in the first embodiment as described above, inner diameter r2 of second cylindrical portion 30 is configured to be larger than inner diameter r1 of first cylindrical portion 20. Transfer path 15 communicating ignition chamber 13 with first combustion chamber 23 is formed of one hole drilled in base portion 10 to extend linearly, and second transfer path 16 communicating ignition chamber 13 with second combustion chamber 33 is formed of one hole drilled in base portion 10 to extend linearly. Check valves 60, 65 are respectively provided adjacent to the wall surfaces on the ignition chamber 13 side in first combustion chamber 23 and second combustion chamber 33. Check valves 60, 65 respectively have outer shapes slightly larger than inner diameter r1 of first cylindrical portion 20 and inner diameter r2 of second cylindrical portion 30, and are respectively fitted slidably in grooves 20a, 30a provided at the portions closer to ignition chamber 13 in first cylindrical portion 20 and second cylindrical portion 30.

At the middle portions of check valves 60, 65, protrusion portions 61, 66 protruding toward ignition chamber 13 are respectively provided, and these protrusion portions 61, 66 can respectively close first transfer path 15 and second transfer path 16 from the first combustion chamber 23 side and the second combustion chamber 33 side. In addition, the peripheral portions of check valves 60, 65 are respectively flexed toward the side opposite to the ignition chamber 13 side, and through-holes 62, 67 are respectively provided in these flex portions. These check valves 60, 65 are formed of metal, for example, such as stainless steel, iron steel, aluminum alloy or stainless alloy and have main surfaces positioned on the side opposite to the ignition chamber 13 side, to which cushion materials 28, 38 are respectively attached.

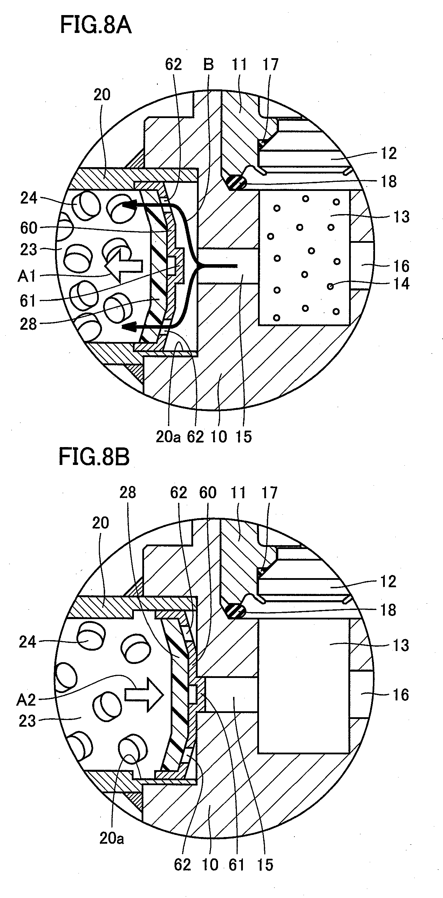

Fig. 8A and Fig. 8B are views illustrating the operation of the check valve of the gas generator in the present embodiment. Fig. 8A is an enlarged cross-sectional view schematically showing a stage at which combustion of the enhancer agent in the ignition chamber has started, and Fig. 8B is an enlarged cross-sectional view schematically showing a stage at which combustion of the gas generating agent in the first combustion chamber has started. In the following, referring to these figures, the operation of check valve 60 in the case where the pressure in first combustion chamber 23 becomes higher than the pressure in second combustion chamber 33 will be described.

As shown in Fig. 8A, when igniter 12 is actuated and enhancer agent 14 stored in ignition chamber 13 starts burning, the pressure in ignition chamber 13 rises, which breaks off the sealing of seal member 19 so that ignition chamber 13 and first transfer path 15 are brought into communication with each other. Accordingly, the pressure in first transfer path 15 also rises, and check valve 60 is pushed in the direction of arrow A1 in the figure based on the pressure difference from first combustion chamber 23 so that the closeness by check valve 61 is released, causing gas to flow into the space, and bringing first transfer path 15 and first combustion chamber 23 into communication with each other through through-hole 62 provided to check valve 60. In this state, hot particles pass through first transfer path 15 and flow into first combustion chamber 23 along the direction of arrow B in the figure, so that gas generating agent 24 stored in first combustion chamber 23 is fired and burned to generate a large amount of gas. Here, similar to this, also on the second combustion chamber 33 side, check valve 65 is moved in response to actuation of igniter 12, and the closeness of second transfer path 16 by check valve 65 is released, so that combustion of gas generating agent 34 stored in second combustion chamber 33 starts.

The combustion of gas generating agent 24 as described above raises the pressure in first combustion chamber 23, and when the pressure in first combustion chamber 23 becomes higher than the pressure in first transfer path 15, as shown in Fig. 8B, check valve 60 is pushed back in the direction of arrow A2 in the figure based on the pressure difference from first combustion chamber 15, so that protrusion portion 61 of check valve 60 closes first transfer path 15, and first transfer path 15 and first combustion chamber 23 become incommunicable. After first transfer path 15 and first combustion chamber 23 become incommunicable with each other, gas generating agent 24 continues to burn as long as gas generating agent 24 stored in first combustion chamber 23 is left. Accordingly, the airbag inflates and expands.

Because of such a configuration, in the state in which gas generating agent 24 is burned in first combustion chamber 23, check valve 60 is driven, based on the pressure difference between first combustion chamber 23 and first transfer path 15 (that is, the pressure difference between first combustion chamber 23 and ignition chamber 13 or second combustion chamber 33), to slidably move and close first transfer path 15, so that first combustion chamber 23 and second combustion chamber 33 can be brought into a completely incommunicable state. Therefore, check valve 60 functions as restraint means, and during operation of gas generator 1F, that is, in the state where gas generating agents 24, 34 are fired by enhancer agent 14 ignited by igniter 12, an effect of combustion of gas generating agent 24 stored in first combustion chamber 23 on combustion of gas generating agent 34 stored in second combustion chamber 33 is restrained. Therefore, it becomes possible that the combustion characteristics of gas generating agent 24 in first combustion chamber 23 and the combustion characteristics of gas generating agent 34 in second combustion chamber 33 are substantially independent of each other, so that the intended combustion characteristics of gas generating agents 24, 34 in the respective combustion chambers 23, 33 can be obtained, and desired outputs can be obtained in respective gas output portions 21, 31.

Although, in gas generator 1F in the present embodiment, it has been described that similar check valve 65 is also provided on the second combustion chamber 33 side, as shown in Fig. 7, by way of example, installation of this check valve 65 on the second combustion chamber 33 side may be eliminated depending on situations. It may be eliminated when the rising speed of the internal pressure in first combustion chamber 23 is evidently higher than that of second combustion chamber 33, for example, in a case where uniform outputs in a pair of gas output portions are not desired, (for example, a case where respective airbags are mounted, independently one for each, for a pair of gas output portions and they are intended to expand at different expansion speeds, a case where the internal pressure difference between the aforementioned pair of airbags is intended, or a case where a single airbag is mounted on both of a pair of gas output portions, and the duration of the expanded airbag is intended to be prolonged by adjusting the duration of the gas output at the pair of gas output portions). In other words, when it is unlikely that combustion of gas generating agent 34 in second combustion chamber 33 has an effect on combustion of gas generating agent 24 in first combustion chamber 23 through second transfer path 16, ignition chamber 13 and first transfer path 15 (when there is no chance that the pressure in second combustion chamber 33 becomes greater than the pressure in first combustion chamber 23), check valve 65 on the second combustion chamber 33 side can be eliminated.

As described above, in a case where uniform outputs in a pair of gas output portions are not desired, (for example, a case where respective airbags are mounted, independently one for each, for a pair of gas output portions and they are intended to expand at different expansion speeds, a case where internal pressure difference between the aforementioned pair of airbags is intended, or a case where a single airbag is mounted on both of a pair of gas output portions, and the duration of the expanded airbag is intended to be prolonged by adjusting the duration of the gas output at the pair of gas output portions), employment of the configuration of the gas generator as in the present embodiment allows the respective output characteristics in a pair of gas output portions to be different from each other without slowing down the gas output, and without elongating the gas generator, and in addition, while surely preventing a large effect of combustion of the gas generating agent in the first and second combustion chambers on combustion of the gas generating agent in the respective other combustion chamber. As a result, a gas generator suitable to realize a compact, high-performance airbag apparatus can be provided. In particular, it is possible to provide a gas generator advantageous in incorporation into a side airbag or a curtain airbag which has to be applied to such a small space as between the occupant and the side face of a vehicle.

Although, in gas generator 1F in the present embodiment, first transfer path 15 and second transfer path 16 are respectively brought into a closed state by check valves 60, 65 before actuation of igniter 12, by way of example, first transfer path 15 and second transfer path 16 may not be brought into a closed state by check valves 60, 65 before actuation of igniter 12.

In addition, although, in gas generator 1F in the present embodiment, it has been described that check valves 60, 65 configured such that valve bodies slidably move based on the pressure difference between first combustion chamber 23 and second combustion chamber 33 to fulfill the function as check valves are provided in first combustion chamber 23 and second combustion chamber 33, by way of example, a check valve having a configuration different from this may be used. For example, one having a valve body deformed based on the pressure difference between first combustion chamber 23 and second combustion chamber 33 to function as a check valve may be used. Also in this case, first transfer path 15 and second transfer path 16 may be respectively brought into a closed state by check valves before actuation of igniter 12, or first transfer path 15 and second transfer path 16 may not be brought into a closed state by check valves before actuation of igniter 12.

Although, in the first to fifth embodiments as described above, it has been described that the present invention is applied to a so-called T-shaped gas generator having an approximately cylindrical housing with opposite ends closed and discharging gas from the opposite end portions, by way of example, the present invention is applicable to any gas generator that has two or more gas output portions driven by one igniter. Therefore, the present invention is applicable to gas generators having a variety of configurations, other than the aforementioned T-shaped gas generator.

Furthermore, although, in the first to fifth embodiments as described above, a gas generator in which a gas generating agent and a filter member are arranged in a combustion chamber has been described by way of example, a gas generator may not always configured in this manner, and a gas generator may be configured such that a partition plate is arranged between a gas generating agent and a filter member and that a combustion chamber in which a gas generating agent is stored and a filter chamber in which a filter member is stored are separately provided. In this case, it is preferable that a filter member is formed like a hollow cylinder and a gas discharge opening is provided on the peripheral wall of a cylindrical member defining a filter chamber.

Moreover, although, in the first to fifth embodiments as described above, a gas generator configured such that an igniter and an enhancer agent are separately stored in an ignition chamber has been described by way of example, such a configuration may be employed in that not only an ignition charge but also an enhancer agent is packed inside the igniter. Also in this case, the present invention may be applied, as a matter of course.

It is noted that the characteristic configurations shown in the embodiments above can be combined with each other, as a matter of course.

In this manner, each of the foregoing embodiments as disclosed herein are illustrative and not limitative in all respects. The technical scope of the present invention is defined by the claims and equivalencies to the claims and all modifications within the claims are embraced herein.

## Claims

1. A gas generator comprising:
a housing including a base portion, a first cylindrical portion extending from said base portion in a first direction, and a second cylindrical portion extending in a second direction different from said first direction;
an ignition chamber provided to said base portion and having a single igniter and an enhancer agent stored therein;
a first combustion chamber provided in said first cylindrical portion, having a gas generating agent stored therein, and communicating with said ignition chamber;
a second combustion chamber provided in said second cylindrical portion, having a gas generating agent stored therein, and communicating with said ignition chamber;
a first discharge path provided in said first cylindrical portion at a part positioned opposite to said ignition chamber as viewed from said first combustion chamber for discharging gas generated in said first combustion chamber to outside of said first cylindrical portion; and
a second discharge path provided in said second cylindrical portion at a part positioned opposite to said ignition chamber as viewed from said second combustion chamber for discharging gas generated in said second combustion chamber to outside of said second cylindrical portion, wherein
an inner diameter of said first combustion chamber is different from an inner diameter of said second combustion chamber.

2. The gas generator according to claim 1, wherein an axial length of said first combustion chamber is different from an axial length of said second combustion chamber.

3. The gas generator according to claim 1, wherein
said first direction and said second direction are opposite directions, and
said base portion is sandwiched between said first cylindrical portion and said second cylindrical portion such that said ignition chamber, said first combustion chamber and said second combustion chamber are arranged linearly, whereby said housing has an elongated, approximately cylindrical shape as a whole.

4. The gas generator according to claim 1, wherein
said ignition chamber and said first combustion chamber are in communication with each other by a first transfer path provided in said housing, and
said ignition chamber and said second combustion chamber are in communication with each other by a second transfer path provided in said housing, the gas generator further comprising
restraint means for restraining combustion of said gas generating agent stored in said first combustion chamber from having an effect on combustion of said gas generating agent stored in said second combustion chamber, though said first transfer path, said ignition chamber and said second transfer path, when said gas generating agent is fired and burned by said enhancer agent ignited by said igniter.

5. The gas generator according to claim 4, wherein said restraint means includes that said first transfer path and said second transfer path are arranged to be displaced from each other such that a center line of said first transfer path and a center line of said second transfer path do not overlap on a same straight line.

6. The gas generator according to claim 5, wherein
said first transfer path is provided in said housing such that a center line of said first transfer path and a center axis of said first cylindrical portion overlap on a same straight line, and in addition, said second transfer path is provided in said housing such that a center line of said second transfer path and a center axis of said second cylindrical portion overlap on a same straight line, and
said first cylindrical portion is arranged offset with respect to said second cylindrical portion such that the center axis of said first cylindrical portion and the center axis of said second cylindrical portion do not overlap.

7. The gas generator according to claim 4, wherein said restraint means has a separation wall provided between an opening face of said first transfer path provided on a wall surface of said ignition chamber and an opening face of said second transfer path provided on a wall surface of said ignition chamber.

8. The gas generator according to claim 4, wherein said restraint means has a check valve which is disposed at a position that allows said first transfer path to be closed, and which is driven based on a pressure difference between said first combustion chamber and said second combustion chamber.
